# FASCICULE DE BREVET EUROPEEN

(11) **EP 2 252 823 B1**
(45) Date de publication et mention de la délivrance du brevet: **02.11.2011**
(21) Numéro de dépôt: 09723210.2
(22) Date de dépôt: 03.03.2009
(51) Int. Cl.: F16L 33/01

(54) **METHODE ET INSTALLATION DE MONTAGE D'UN EMBOUT DE RACCORDEMENT**
VERFAHREN UND ANLAGE ZUR MONTAGE EINES VERBINDUNGSENDSTÜCKS
METHOD AND INSTALLATION FOR MOUNTING A CONNECTION END FITTING

(30) Priorité: 07.03.2008 FR 0801251
(43) Date de publication de la demande: 24.11.2010
(73) Titulaire: Technip France, 92400 Courbevoie (FR)
(72) Inventeur: DEMANZE, Frédéric, F-76490 Caudebec en Caux (FR); PINSARD, Christophe, F-76000 Rouen (FR); PECKEU, Grégory, F-76380 Canteleu (FR)
(74) Mandataire: Bertrand, Didier
(86) Numéro de dépôt international: PCT/FR2009/000226
(87) Numéro de publication internationale: WO 2009/115703

(56) Documents cités:
- EP-A- 0 777 034
- WO-A-99/19656
- WO-A-03/071179
- US-B1- 6 382 681

## Description

La présente invention se rapporte à une méthode de montage d'un embout de raccordement sur une conduite tubulaire flexible et à une installation pour la mise en oeuvre de ladite méthode. L'invention concerne également une conduite tubulaire flexible équipée d'un tel embout de raccordement.

Les conduites tubulaires flexibles concernées sont plus particulièrement destinées à une exploitation pétrolière en mer. Elles sont généralement utilisées pour transporter offshore et sur de grandes distances des hydrocarbures sous pression, du type pétrole ou gaz. Ces conduites peuvent aussi être utilisées pour transporter d'autres fluides, par exemple de l'eau de mer pressurisée destinée à être injectée dans un gisement pétrolier en vue d'augmenter la quantité de pétrole produite par ce gisement. Ces conduites flexibles peuvent être immergées à de grandes profondeurs et doivent donc résister à des pressions et des tensions élevées. Elles sont notamment décrites dans les documents normatifs API 17J « Specification for Unbonded Flexible Pipe » et API RP 17B « Recommended Practice for Flexible Pipe » établis par l'American Petroleum Institute.

Les conduites tubulaires flexibles comportent habituellement une gaine de pression interne en matériau polymérique assurant l'étanchéité vis-à-vis du fluide transporté, et des couches de renfort entourant la gaine de pression et assurant notamment la reprise des efforts liés à la pression du fluide transporté et à la tension axiale appliquée à la conduite. La gaine de pression est généralement réalisée par extrusion à chaud d'un matériau polymère thermoplastique. Les couches de renfort sont généralement constituées d'enroulements hélicoïdaux de fils de renfort en acier ou en matériau composite. En outre, ces conduites flexibles présentent généralement une gaine externe de protection en matériau polymérique.

Certaines conduites flexibles comportent de plus une carcasse interne disposée à l'intérieur de la gaine de pression interne et constituée d'un feuillard métallique enroulé et agrafé. Cette carcasse interne a pour fonction principale d'augmenter la résistance à l'écrasement de la conduite sous pression externe. Les conduites flexibles comportant une carcasse interne sont dites à passage non lisse (« rough bore » en anglais) en raison de la géométrie de la carcasse. Les conduites flexibles ne comportant pas de carcasse interne et pour lesquelles la couche la plus interne est la gaine de pression interne sont dites à passage interne lisse (« smooth bore » en anglais).

Les embouts de raccordement (« end fitting » en anglais) des conduites, destinés à leurs connexions entre elles ou avec des équipements terminaux, sont également définis dans les documents normatifs précités de l'API. Ils doivent être réalisés dans des conditions assurant à la fois une bonne solidarisation et une bonne étanchéité.

Ainsi, la gaine de pression doit tout naturellement être raccordée de manière étanche à l'embout de raccordement pour assurer la continuité de l'étanchéité. Cette étanchéité est généralement obtenue par un procédé de sertissage de la gaine c'est-à-dire par une pénétration radiale partielle d'un élément rigide dans la gaine. Dans ce but, l'embout est équipé d'au moins deux portions annulaires concentriques, dont l'une est tronconique de manière à pouvoir sertir une bordure annulaire de la gaine de pression selon une épaisseur donnée. On pourra notamment se référer aux documents WO97/25564, WO02/39003 et WO03/071179 qui décrivent de tels embouts de conduite tubulaire flexible.

Un inconvénient du montage de l'embout précité à l'extrémité de la conduite, qui est d'ailleurs mentionné dans le document WO03/071179, réside dans l'évolution de la gaine de pression dans le temps. Et plus précisément, le problème résulte de l'exsudation des plastifiants en dehors de la masse du matériau polymère constituant précisément la gaine, c'est-à-dire dans la migration de ces plastifiants en dehors de la masse du matériau. De ce fait, la gaine de pression perd une partie de ses propriétés mécaniques, en devenant moins flexible, mais surtout, ses dimensions évoluent sensiblement, et son épaisseur notamment au niveau de la bordure annulaire, diminue. En conséquence, la pression de sertissage qui assure l'étanchéité entre l'embout de raccordement et la gaine de pression, s'en trouve diminuée elle aussi, et partant, l'étanchéité peut être altérée.

Ce phénomène concerne tout particulièrement les conduites flexibles destinées à véhiculer des hydrocarbures à haute température, typiquement entre 100°C et 130°C. Afin de résister à ces températures élevées, la gaine de pression de ces conduites est généralement réalisée par extrusion d'un polymère à base de PVDF (« polyvinylidene fluoride » en anglais), tel que décrit par exemple dans le document US4706713. Or, si le PVDF pur a un bon comportement à haute température, il présente en revanche l'inconvénient d'une ductilité insuffisante à basse température pour les applications visées. C'est pourquoi les polymères à base de PVDF utilisés pour la réalisation de la gaine de pression des conduites flexibles comportent généralement des additifs du type plastifiant permettant d'améliorer la flexibilité et le comportement à froid de la gaine. Or, lorsque la conduite flexible est mise en service, une part de ces plastifiants peut exsuder et migrer progressivement en dehors de la masse de la gaine de pression, ce qui conduit à une perte progressive de volume de la gaine et donc à une diminution de la pression de sertissage au niveau de l'embout de raccordement.

L'objet du document WO03/071179 est précisément une méthode de détection de l'évolution de la position relative de la bordure annulaire de gaine et de l'embout de manière à détecter une éventuelle perte d'étanchéité liée à ce phénomène de perte de plastifiant. Un tel dispositif de contrôle est relativement complexe, car il fait appel à des capteurs de position, qui doivent être opérationnels durant toute la vie de la conduite, qui peut être supérieure à une vingtaine d'années. Et au surplus, il ne résout pas le problème de la perte d'étanchéité.

Par conséquent, un problème qui se pose et que vise à résoudre la présente invention, est de fournir une méthode et une installation de montage d'un embout de raccordement sur une conduite tubulaire flexible qui permette précisément de s'affranchir des dispositifs de contrôle précité, et qui confère une étanchéité parfaite de la gaine de pression et de l'embout au cours du temps.

Dans ce but, et selon un premier objet, la présente invention propose une méthode de montage d'un embout de raccordement sur une conduite tubulaire flexible destinée au transport des hydrocarbures, ladite méthode étant du type selon laquelle : on fournit une conduite tubulaire flexible présentant une extrémité libre et comportant une gaine de pression interne et des couches de renfort faites de fils d'armure enroulés autour de ladite gaine de pression, ladite gaine de pression étant réalisée dans un matériau polymère comportant des additifs volatiles aptes à exsuder à la surface de ladite gaine et on fournit un embout muni de deux portions annulaires concentriques de sertissage; puis on dénude d'abord ladite gaine de pression de ladite extrémité libre pour libérer une bordure annulaire présentant une paroi interne opposée à une paroi externe, et on sertit ensuite ladite bordure annulaire entre lesdites deux portions annulaires concentriques suivant une épaisseur donnée pour former une liaison étanche entre ladite bordure annulaire et ledit embout ; selon l'invention, avant l'étape de sertissage : on forme une chambre annulaire à l'intérieur de ladite bordure annulaire le long de ladite paroi interne, ladite paroi interne formant une portion de surface interne de ladite chambre annulaire ; et, on fait circuler un fluide à l'intérieur de ladite chambre annulaire pour extraire localement lesdits additifs volatiles de ladite bordure annulaire de gaine à travers ladite paroi interne. Par quoi les variations dimensionnelles de ladite épaisseur donnée de ladite bordure annulaire sont sensiblement nulles dans le temps.

Dans la présente demande, le terme « fils d'armure » désigne indifféremment des fils ou des câbles métalliques, des fils en matériau composite du type par exemple fibre de carbone ou fibre de verre, et des cordes ou des rubans tissés à base de fibres à haute ténacité du type par exemple des aramides.

Ainsi, une caractéristique de l'invention réside dans la mise en oeuvre d'une chambre annulaire le long de la paroi interne, de telle manière que cette paroi interne constitue une surface interne de la chambre annulaire. De la sorte, en faisant circuler un fluide à l'intérieur de cette chambre annulaire, on provoque l'extraction locale des additifs volatiles contenus dans la gaine de pression au niveau de la bordure annulaire. En effet, au repos, compte tenu de leur tension de vapeur, ces additifs diffusent à travers la paroi interne jusqu'à atteindre un équilibre entre le matériau polymère de la gaine et l'extérieur du matériau. En faisant circuler un fluide, l'équilibre n'est jamais atteint, et la diffusion des additifs est continue. De la sorte, on accélère artificiellement la diffusion et on extrait localement et rapidement les plastifiants contenus dans la gaine de pression au niveau de la bordure annulaire. En conséquence, la bordure annulaire qui sera sertie ensuite dans l'embout, avec une pression de sertissage donnée, n'évoluera plus dimensionnellement dans le temps, puisqu'elle est maintenant dépourvue de plastifiant, et que ces derniers n'exsuderont donc pas. Ainsi, l'étanchéité de la gaine de pression et de l'embout demeura intacte avec le temps.

Avantageusement, on maintient en forme la paroi interne de ladite bordure annulaire durant la circulation dudit fluide de manière à ce que, non seulement le diamètre interne de la bordure annulaire demeure constant, mais aussi, de manière à ce qu'elle conserve sa forme initiale. De la sorte, le sertissage de la bordure de gaine entre les deux portions annulaires concentriques est rendu plus aisé, et la liaison entre gaine et embout est parfaitement étanche.

De manière à assurer une extraction rapide des additifs, on guide ledit fluide selon des directions sensiblement parallèles à ladite paroi interne. Préférentiellement, on fait circuler un fluide chauffé à une température supérieure à 130°C, à l'intérieur de ladite chambre annulaire de manière à favoriser la diffusion des plastifiants à travers l'épaisseur de la bordure de gaine et au surplus, de façon à élever la tension de vapeur de ces plastifiants ce qui favorise plus encore la vitesse de leur extraction. Selon un mode de réalisation particulièrement avantageux on fait circuler de l'air chaud à l'intérieur de ladite chambre annulaire. De la sorte, la méthode est relativement économique, car le fluide est alors bon marché, et au surplus elle est non polluante. Avantageusement, on fait circuler un fluide à une pression supérieure à deux bars à l'intérieur de ladite chambre annulaire de manière à exercer sur la paroi interne de la gaine une pression suffisante pour limiter le rétreint de la gaine et éviter ainsi que cette dernière, en se rétreignant, ne vienne obturer totalement ou partiellement la chambre annulaire. De plus, dans le but d'extraire ces plastifiants dans toute l'épaisseur de la bordure annulaire de la gaine, on confine avantageusement l'espace qui s'étend autour de ladite bordure annulaire et on fait circuler un autre fluide à l'intérieur dudit espace confiné pour extraire localement lesdits additifs volatiles de ladite bordure annulaire de gaine à travers ladite paroi externe. Préférentiellement, on fait circuler ledit autre fluide chauffé à une température égale ou supérieure à la température dudit fluide chauffé, à l'intérieur dudit espace confiné de manière à extraire une plus grande quantité de plastifiant. Ainsi qu'on l'expliquera plus en détail dans la suite de la description, la mise en circulation dudit autre fluide chauffé est plus aisée et engendre moins de contraintes liées à la mise en température des pièces ou des éléments de maintien.

Selon un deuxième objet, la présente invention propose une conduite tubulaire flexible destinée au transport des hydrocarbures, ladite conduite tubulaire flexible présentant une extrémité libre équipée d'un embout de raccordement, ledit embout de raccordement étant monté sur ladite conduite tubulaire conformément à une méthode telle que décrit ci-dessus. En particulier, la gaine de pression dans sa bordure annulaire où elle est sertie, au niveau de l'extrémité libre de la conduite, est dépourvue de plastifiant.

Selon un troisième objet, la présente invention propose une installation de montage d'un embout de raccordement sur une conduite tubulaire flexible destinée au transport des hydrocarbures, ladite conduite tubulaire flexible présentant une extrémité libre et comportant une gaine de pression interne et des couches de renfort faites de fils d'armure enroulés autour de ladite gaine de pression, ladite gaine de pression étant réalisée dans un matériau polymère comportant des additifs volatiles aptes à exsuder à la surface de ladite gaine, ladite gaine de pression présentant une bordure annulaire dans ladite extrémité libre, ladite bordure annulaire présentant une paroi interne opposée à une paroi externe ; selon l'invention, l'installation comprend : des moyens pour former une chambre annulaire à l'intérieur de ladite bordure annulaire le long de ladite paroi interne, ladite paroi interne formant une portion de surface interne de ladite chambre annulaire ; et, des moyens pour faire circuler un fluide à l'intérieur de ladite chambre annulaire pour extraire localement lesdits additifs volatiles de ladite bordure annulaire de gaine à travers ladite paroi interne.

Ainsi, lesdits moyens pour former une chambre annulaire comprennent une bague d'extraction, ou canule, présentant une surface externe de bague opposée à une surface interne de bague et une gorge ménagée dans ladite surface externe. Par exemple, la gorge présente une largeur comprise entre sensiblement 0,5 fois et 1,5 fois le rayon de la bague et une profondeur comprise entre 1/20 et 1/100 du rayon. De la sorte, la bordure annulaire recouvre la surface externe de bague et la gorge en formant ainsi une chambre annulaire au niveau précisément de la gorge. Cette chambre annulaire est délimitée par la paroi interne de la bordure annulaire et par les parois de la gorge. Avantageusement, ladite bague d'extraction présente une bordure avant libre taillée en biseau pour engager ladite bordure avant à l'intérieur de ladite bordure annulaire de ladite gaine de pression et à l'opposé, une bordure arrière d'arrêt. Grâce à cette bordure avant en biseau, la bague d'extraction, ou canule, est plus aisément insérée à l'intérieur de la bordure annulaire bien que cette dernière soit avantageusement ramollie par chauffage avant l'insertion de la bague d'extraction. Selon un mode de réalisation particulièrement avantageux, lesdits moyens pour faire circuler un fluide à l'intérieur de ladite chambre annulaire comprennent des chemins de passages ménagés dans l'épaisseur de ladite bague d'extraction et débouchant dans ladite gorge. De la sorte, on forme un circuit relativement étanche et à travers lequel on pourra faire circuler ledit fluide. Par ailleurs, lesdits chemins de passage comprennent des chemins d'entrée qui débouchent dans une première portion de gorge située vers ladite bordure avant et dans ladite bordure arrière et des chemins de sortie qui débouchent dans une seconde portion de gorge située vers ladite bordure arrière et dans ladite bordure arrière. De la sorte, le fluide circule le long de la paroi interne de la bordure annulaire, selon une direction sensiblement axiale et dans un sens orienté vers l'extérieur de la gaine. On expliquera ci-après plus en détail, les avantages pratiques d'un tel sens de circulation du fluide. Avantageusement, l'installation comprend des moyens pour faire circuler un fluide chauffé et notamment de l'air, à une température supérieure à 130°C, à l'intérieur desdits chemins de passage.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique d'ensemble d'une installation conforme à l'invention permettant de mettre en oeuvre la méthode, objet également de l'invention; et,
- la Figure 2 est une vue schématique de détail de l'installation représentée sur la Figure 1 ; et,
- la Figure 3 est une vue schématique de détail d'une installation conforme à l'invention selon un autre mode de réalisation.

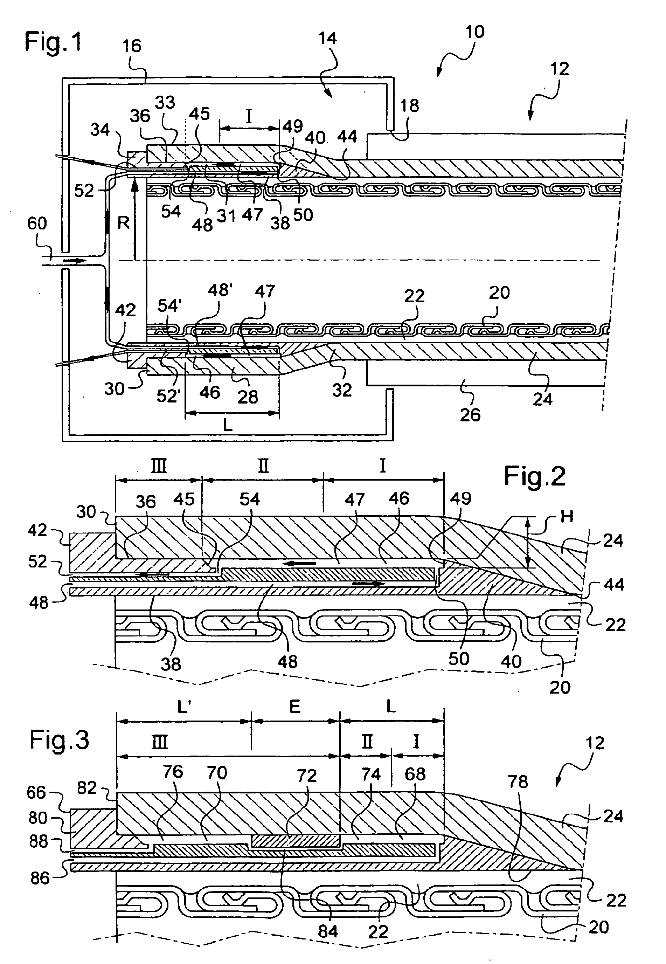

La Figure 1 illustre une installation 10 montrant partiellement et en coupe axiale, une conduite tubulaire flexible 12, laquelle présente une extrémité libre 14. Cette extrémité libre 14 est installée dans une étuve 16 à travers un passage circulaire 18 muni d'un joint étanche non représenté. La conduite tubulaire flexible 12 présente ici, de l'intérieur vers l'extérieur, une carcasse interne 20 constituée d'un feuillard formé, enroulé et agrafé, une gaine sacrificielle 22 en matière plastique, une gaine interne de pression 24 autour de laquelle sont enroulés des fils d'armure 26 de renfort. La carcasse 20 permet d'offrir une résistance à l'écrasement de la conduite et la gaine sacrificielle 22 permet de préserver la gaine interne de pression 24 des aspérités de la carcasse 20. En outre, les fils d'armure 26 de renfort, permettent de reprendre les efforts de traction qui s'exercent sur la conduite, pour les fils les plus externes et de reprendre les efforts radiaux pour les fils les plus internes. Il est à noter que la Figure 1 présente uniquement de façon schématique les fils de renfort les plus internes, enroulés à pas court avec un angle d'hélice généralement compris entre 75° et 90° pour former la voûte de pression (« pressure vault » en anglais) de la conduite. Les fils d'armure les plus externes, constitués de nappes croisées de fils enroulés à pas long avec un angle d'hélice inférieur ou égal à 55° pour former les armures de traction de la conduite, ne sont pas représentés sur la Figure 1. En effet, pendant cette étape du montage de l'embout de raccordement, les nappes d'armures de traction sont dénudées et provisoirement repliées de façon à ne pas pénétrer dans l'étuve 16.

Ainsi, sur la Figure 1, la gaine interne de pression 24 est dénudée, au moins dans l'extrémité libre de la conduite 14, et sur une longueur correspondant sensiblement à son diamètre. De la sorte est libérée une bordure annulaire 28 qui s'étend entre un bord annulaire libre 30 et une zone annulaire 32 éloignée du bord annulaire 30 et située vers la gaine interne de pression 24 non dénudée. La bordure annulaire 28 présente une paroi interne 31 opposée à une paroi externe 33. En outre, et c'est un objet de l'invention, une bague d'extraction 34, ou canule, est insérée entre la bordure annulaire 28 et la gaine sacrificielle 22. La bague d'extraction 34 présente une surface externe 36 de bague opposée à une surface interne 38 de bague et une bordure avant libre 40, taillée en biseau et opposée à une bordure arrière d'arrêt 42. La bordure avant libre 40 est taillée en pointe, selon un angle compris par exemple, entre 10 et 30°, de la bordure arrière d'arrêt 42 vers une extrémité libre effilée 44 qui rejoint la surface interne de bague 38. La longueur de la bague d'extraction 34 est par exemple voisine de son diamètre. En outre, son épaisseur est comprise entre 1/15 et 1/8 de son diamètre, par exemple 1/12 de son diamètre.

La canule 34 présente, dans sa surface externe de bague 36, une gorge 46 large, située sensiblement à égale distance de l'extrémité libre effilée 44 et la bordure arrière d'arrêt 42. Cette gorge 46 définit alors une chambre annulaire 47 avec la paroi interne 31 de bordure annulaire 28 qui la recouvre. La gorge 46 s'étend entre deux bords opposés, un premier 45 situé vers la bordure arrière d'arrêt 42 et un second 49 situé vers la bordure avant libres 40 et sur une largeur L équivalent sensiblement au rayon R de la bague d'extraction 34. La largeur L de la gorge 46 est comprise entre 40 et 110 mm, avantageusement entre 50 et 60 mm et par exemple voisine de 55 mm. En outre, la gorge 46 présente une profondeur H comprise entre 1/100 et 1/20 de sa largeur, plus précisément entre 1/70 et 1/40, par exemple 1/55 de sa largeur, soit avantageusement 1 mm, lorsque la largeur L de la gorge est de 55 mm . De la sorte, lors de la mise en oeuvre de l'une des étapes de la méthode de raccordement d'un embout et d'une conduite que l'on décrira ci-après, la paroi interne 31 ne risque pas de venir s'appliquer contre le fond de la gorge 46, ou si cela est le cas elle peut en être écarté facilement comme on l'expliquera ci-après et, la bague d'extraction 34 peut ensuite être retirée aisément.

Avant de revenir sur la Figure 1 pour décrire la méthode objet de l'invention, dans son ensemble, on se reportera à la Figure 2, montrant plus en détail la bague d'extraction 34 en coupe axiale, dans son épaisseur et sa surface externe 36 dans laquelle est ménagée la gorge 46. Ainsi, outre la gorge 46, la bague d'extraction 34 présente dans son épaisseur entre sa surface externe 36 et sa surface interne 38, un premier canal axial 48 formant premier chemin de passage, qui s'étend de la bordure arrière d'arrêt 42 jusqu'à la bordure avant libre 40 et qui débouche à travers un premier orifice 50 dans le fond de la gorge 46 près du second bord 49. En outre, la bague d'extraction 34 présente, toujours dans son épaisseur, sensiblement entre sa surface externe 36 et le premier canal axial 48, un second canal axial 52 formant second chemin de passage, qui s'étend de la bordure arrière d'arrêt 42 jusqu'au premier bord 45 de la gorge 46 et qui débouche précisément à travers un seconde orifice 54 dans le fond de la gorge 46 près du bord 45. On observera que seule une paire de canaux axiaux 48, 52 est représentée sur la Figure 2 dans le même plan de coupe, mais qu'en réalité, la bague d'extraction 34 présente une pluralité de paires de canaux axiaux, par exemple entre cinq et huit paires espacées les unes des autres dans la circonférence de la bague d'extraction 34. De plus, les canaux axiaux 48, 52 des paires de canaux, ne sont pas nécessairement superposés. Ils le sont sur cette Figure 2 et sur la Figure 1 également, afin de rendre plus clair de la description. Dans la pratique, les canaux sont décalés angulairement sensiblement d'une même valeur pour déboucher en quinconce dans le fond de la gorge 46 entre les deux bords opposés 45, 49.

Selon un autre mode de mise en oeuvre particulièrement avantageux, la bague d'extraction 34 présente huit premiers canaux axiaux, décalés angulairement chacun les uns des autres de 45° dans la circonférence de la bague d'extraction 34 et qui s'étendent jusqu'au second bord 49 ; tandis qu'elle présente quatre seconds canaux décalés angulairement de 90° les uns par rapport aux autres et qui s'étendent jusqu'au premier bord 45.

Par ailleurs, on observera sur cette Figure 2, que le premier bord 45 de la gorge 46 est chanfreiné de manière à faciliter l'introduction de la bague d'extraction 34 à l'intérieur de la bordure annulaire 28. De plus la bordure avant libre 40 taillée en pointe l'est également pour faciliter l'enfoncement à force de la bague d'extraction 34 et séparée la gaine de pression 24 de la gaine sacrificielle 22. Toutefois, pour des raisons pratiques, la bordure annulaire 28 et la bague d'extraction 34 sont préchauffées avant l'insertion de la bague d'extraction 34 entre la bordure annulaire 28 et la gaine sacrificielle 22 de manière à faciliter cette insertion. En outre, on veillera à ce que la chambre annulaire 47 alors constituée, ainsi que les canaux axiaux constituent un espace relativement étanche.

Compte tenu de la position relative de la bordure annulaire 28 de la gaine d'étanchéité 24 et de la bague d'extraction 34, la bordure annulaire 28 présente axialement trois zones annulaires distinctes, une première zone I située vers la zone annulaire 32, et qui s'étend, à partir du second bord 49, sensiblement sur une demie largeur L de gorge 46 ; une deuxième zone II qui s'étend sur l'autre demie longueur L de gorge 46, jusqu'au premier bord 45 ; et enfin une dernière zone III qui s'étend du premier bord 45 de la gorge 46 jusqu'au bord annulaire libre 30. On expliquera ci-après, compte tenu de la méthode de montage, les caractéristiques de ces différentes zones.

Ainsi, on se reportera de nouveau à la Figure 1, sur laquelle on retrouve la chambre annulaire 47 et deux paires de canaux diamétralement opposés 48, 52 ; 48', 52'. Ces deux paires de canaux ont strictement la même fonction, c'est pourquoi, les premiers et les seconds canaux axiaux de chacune des paires, portent respectivement des références identiques affectées d'un signe «' » pour la seconde paire.

Les premiers canaux axiaux 48, 48' constituent des canaux d'entrée réunis ensemble vers une même arrivée 60. Les seconds canaux axiaux 52, 52', constituent des canaux de sortie également réunies ensemble vers une même sortie non représentée. Ainsi, selon la méthode conforme à l'invention, après que la gaine de pression 24 a été dénudée pour libérer la bordure annulaire 28, que la bague d'extraction 34 a été engagée à force entre la gaine sacrificielle 22 et la bordure annulaire 28 contre sa paroi interne 31 et qu'a ainsi été formée la chambre annulaire étanche 47 ; on alimente l'étuve 16 en air chaud de manière à porter l'ensemble bague d'extraction 34 et bordure annulaire 28 de gaine 24 à une température comprise entre 120 et 150° C, avantageusement 145° C dans la cas où la gaine 24 est constituée d'un polymère à base de PVDF. Ensuite, on injecte de l'air chaud à travers l'arrivée 60 à une pression comprise entre deux et huit bars, par exemple entre trois et quatre bars. De la sorte, l'air chaud sous pression traverse les premiers canaux axiaux 48, 48' pour venir se répandre dans la chambre annulaire 47 à travers les premiers orifices 50, 50'. De la sorte, la bordure de gaine 28 ayant été ramollie au préalable pendant le préchauffage, cette injection d'air chaud à une pression de 3 bar par exemple, permet d'écarter la paroi interne 31 de la bordure annulaire 28 du fond de la gorge 46 et ainsi de former la chambre annulaire 47 d'un seul tenant en créant un chemin jusqu'aux points d'évacuation formés par les seconds orifices 54, 54'. En effet, la paroi interne 31 tend, parfois pour certaines qualités de gaine de pression, à venir prendre appui dans le fond de la gorge 46 dès que la bague d'extraction 34 est emmanchée à l'intérieur de la bordure de gaine 28, car la profondeur de gorge 46 est relativement faible en regard de sa largeur L.

Ainsi, les points d'injection d'air chaud sont avantageusement ceux des premiers orifices 50, 50' vers le second bord 49 de la gorge 46 tandis que les points d'évacuation sont ceux des seconds orifices 54, 54', car l'air chaud écarte plus facilement la gaine du fond de la gorge dans ce sens plutôt que dans l'autre sens. En effet, la force de rétreint qui tend à plaquer la gaine contre la bague d'extraction 34 diminue vers le bord annulaire libre 30, du fait précisément d'un effet de bord lié à la coupe ; et la pression d'air chaud au niveau des points d'injection est relativement forte et dilate considérablement la bordure annulaire 28. Aussi, il est préférable que cette bordure annulaire 28 se dilate à une distance plus éloignée du bord annulaire libre 30. En outre, et c'est là un autre avantage, la première zone I au regard de laquelle débouche les premiers orifices 50, 50' est une zone de sertissage, et c'est par conséquent dans cette zone I que l'effet de l'air chaud sous pression doit être maximal.

Ainsi, grâce à l'injection d'air chaud à une température voisine de 145° C, après la formation de la chambre annulaire 47, et sous pression d'environ deux à trois bars, et ce pendant une durée comprise entre deux et sept jours, par exemple trois jours, les plastifiants contenu dans la bordure annulaire 28 au niveau de la chambre annulaire 47 sont extraits à travers la paroi interne 31 et sont bien évidemment évacués avec l'air chaud à travers les seconds orifices 54, 54'. Aussi, compte tenu de la température et de la pression de l'air, l'extraction est efficace sur une partie interne substantielle de l'épaisseur de la portion annulaire 28, et plus précisément sur au moins la moitié de l'épaisseur.

En outre, et grâce à l'étuve 16 qui permet de porter la paroi externe 33 de la bordure annulaire 28 à une température supérieure, voisine de 145° C, les plastifiants sont également extraits sur la partie externe de l'épaisseur de la portion annulaire 28, ce qui permet d'augmenter la vitesse de déplastification de la gaine 24.

Selon un premier mode de réalisation de l'étuve 16, celle-ci présente un volume interne important, par exemple d'environ un mètre cube, de telle sorte que l'air chaud présent à l'intérieur de cette dernière ne soit jamais saturé en vapeur de plastifiant au cours du procédé de déplastification. L'air chaud à l'intérieur de l'étuve 16 est en outre avantageusement brassé à l'aide de moyens de ventilation de façon à homogénéiser la température et augmenter la vitesse de déplastification de la gaine 24.

Selon un deuxième mode de réalisation de l'étuve 16, celle-ci présente un volume interne faible, mais est équipée de moyens permettant de renouveler en permanence l'air chaud circulant le long de la paroi externe de la gaine 24. De la sorte, l'air chaud présent à l'intérieur de l'étuve n'est jamais saturé en vapeur de plastifiant malgré le faible volume interne de l'étuve 16.

De la sorte, après quelques jours de traitement, par exemple une semaine, on retire la bague d'extraction 34 grâce à laquelle au surplus, la bordure annulaire 28 a été maintenue en forme avec un diamètre interne conservé, puis on découpe la dernière zone III près du bord annulaire libre 40. Ensuite, et de manière classique, on installe un manchon de raccordement à travers la bordure annulaire 28 découpée, le sertissage ayant lieu plus précisément dans la première zone I correspondant à la zone où le traitement d'extraction a été le plus efficace et où la déplastification est la plus importante. La zone II de la bordure n'est pas quant à elle sertie, elle vient en prise entre une canule effilée d'un embout de raccordement et une paroi interne de voûte de l'embout, et elle vient en butée contre un épaulement de la canule effilée.

De la sorte, une fois sertie, l'épaisseur de cette première zone annulaire I, demeurera constante au fil du temps puisque aucun additif ne s'en échappera.

En conséquence la pression de sertissage demeurera sensiblement constante et partant, l'étanchéité de l'embout et de la gaine interne de pression 24 sera conservée au cours du temps.

Selon encore un autre mode de réalisation représenté sur la Figure 3, on prévoit une bague d'extraction présentant une double chambre annulaire de plus grande dimension pour pouvoir réserver une partie de gaine à un contrôle destructif, mais qui fonctionne toutefois selon un principe identique. Ce contrôle vise à déterminer la teneur résiduel en plastifiant de la zone déplastifiée. En conséquence la bague d'extraction mise en oeuvre présente des différences avec celle illustrée sur les Figures précédentes, aussi de nouvelles références seront portées. En revanche, les références de la conduite tubulaire 12 sont inchangées. Ainsi, on retrouve sur cette Figure 3 la conduite tubulaire 12 présentant, de l'intérieur vers l'extérieur, sa carcasse interne 20, sa gaine sacrificielle 22 et sa gaine interne de pression 24. Par ailleurs, on retrouve également sur cette Figure 3, une seconde bague d'extraction 66 comportant, non plus une seule, mais deux gorges 68, 70 décalées axialement et séparées par un collet 72. La longueur axiale des deux gorges 68, 70 en incluant celle du collet 72, est supérieure à la longueur axiale de la gorge précitée en regard des Figures 1 et 2. De la sorte, les deux gorges 68, 70, définissent respectivement deux chambres annulaires 74, 76 décalées elles aussi axialement. La gorge 68 est située du coté d'une seconde extrémité libre effilée 78, tandis que la gorge 70 est située du coté d'une seconde bague d'arrêt 80. De la sorte, celle des deux chambres annulaires 74, 76 qui est la plus proche d'un second bord annulaire libre 82 de la gaine 24, est la chambre annulaire 76. Les deux chambres annulaires 74, 76 sont reliées entre elles par un ou plusieurs canaux intermédiaires 84 ménagés sous le collet 72. L'air chaud injecté dans la chambre annulaire 74 via un ou des seconds canaux d'injection 86 circule d'abord à l'intérieur de la chambre la plus éloignée du second bord annulaire 82, la chambre annulaire 74, puis à travers le ou les canaux intermédiaires 84 jusqu'à parvenir en retour à l'intérieur de la seconde chambre annulaire 76. Ensuite, il circule alors à l'intérieur de cette seconde chambre annulaire 76 avant d'être évacué vers l'extérieur via un ou des canaux d'évacuation 88. De la sorte, les zones extérieures L et L' de la gaine 24 respectivement situées au droit des chambres annulaires 74, 76 sont déplastifiées, tandis que la zone intérieure E située au droit du collet 72 entre les zones extérieures L et L' précitées n'est pas plastifiée. De plus, les deux chambres annulaires 74, 76 ayant par ailleurs des dimensions similaires, elles sont donc parcourues par des flux d'air chaud présentant des caractéristiques de température, de pression et de débit similaires. II s'en suit que les zones extérieures L, L' de la gaine 24 situées au droit des deux chambres annulaires 74, 76 sont déplastifiées à des degrés voisins et également à des vitesses très proches. Or, la zone de sertissage I est située au droit de la chambre annulaire 74, tandis que la zone de chute III est située quant à elle au droit de la chambre annulaire 76. Cette zone de chute III est ultérieurement découpée lors du montage de l'embout. Par suite, ce mode de réalisation de l'invention permet un contrôle indirect de la qualité de la déplastification au droit de la zone de sertissage I, grâce à une analyse en laboratoire d'échantillons chutés prélevés au droit de la chambre annulaire 76.

Grâce à ce mode de mise en oeuvre, il est possible de déplastifier une plus grande longueur de gaine externe, et notamment une zone située près du second bord annulaire 82 de la gaine 24, qui est de toute façon destinée à être découpée. En revanche, sans le collet 72, la gaine s'appuie dans le fond de la gorge, trop longue axialement, et l'air ne peut plus circuler.

Bien que les exemples des figures 1 à 3 concernent des conduites à passage non lisse («rough bore») comportant une gaine sacrificielle localisée entre la carcasse interne et la gaine interne de pression, l'invention s'applique aussi aux conduites à passage non lisse ne comportant pas une telle gaine sacrificielle, ainsi qu'aux conduites à passage lisse («smooth bore»).

## Revendications

1. Méthode de montage d'un embout de raccordement sur une conduite tubulaire flexible (12) destinée au transport des hydrocarbures, ladite méthode étant du type selon laquelle :
- on fournit une conduite tubulaire flexible (12) présentant une extrémité libre (14) et comportant une gaine de pression interne (24) et des couches de renfort faites de fils d'armure (26) enroulés autour de ladite gaine de pression, ladite gaine de pression interne (24) étant réalisée dans un matériau polymère comportant des additifs volatiles aptes à exsuder à la surface de ladite gaine,
- on fournit un embout muni de deux portions annulaires concentriques de sertissage,
- on dénude ladite gaine de pression interne (24) de ladite extrémité libre (14) pour libérer une bordure annulaire (28) présentant une paroi interne (31) opposée à une paroi externe (33),
- on sertit ladite bordure annulaire (28) entre lesdites deux portions annulaires concentriques suivant une épaisseur donnée pour former une liaison étanche entre ladite bordure annulaire (28) et ledit embout ;
**caractérisée en ce qu**'elle comprend en outre les étapes suivantes, avant l'étape de sertissage :
- on forme une chambre annulaire (47) à l'intérieur de ladite bordure annulaire (28) le long de ladite paroi interne (31), ladite paroi interne formant une portion de surface interne de ladite chambre annulaire ; et,
- on fait circuler un fluide à l'intérieur de ladite chambre annulaire (47) pour extraire localement lesdits additifs volatiles de ladite bordure annulaire (28) de gaine (24) à travers ladite paroi interne (31), par quoi les variations dimensionnelles de ladite épaisseur donnée de ladite bordure annulaire (28) sont sensiblement nulles dans le temps.

2. Méthode de montage selon la revendication 1, **caractérisée en ce qu**'on maintient en forme la paroi interne (31) de ladite bordure annulaire durant la circulation dudit fluide.

3. Méthode de montage selon la revendication 1 ou 2, **caractérisée en ce qu'**on guide ledit fluide selon des directions sensiblement parallèles à ladite paroi interne (31).

4. Méthode de montage selon l'une quelconque des revendications 1 à 3, **caractérisée en ce qu**'on fait circuler ledit fluide chauffé à une température supérieure à 130°C, à l'intérieur de ladite chambre annulaire (47).

5. Méthode de montage selon l'une quelconque des revendications 1 à 4, **caractérisée en ce que** ledit fluide est de l'air chaud.

6. Méthode de montage selon l'une quelconque des revendications 1 à 5, **caractérisée en ce qu'**on fait circuler ledit fluide à une pression supérieure à deux bars à l'intérieur de ladite chambre annulaire (47).

7. Méthode de montage selon l'une quelconque des revendications 1 à 6, **caractérisée en ce qu'**on confine en outre l'espace qui s'étend autour de ladite bordure annulaire (28) et **en ce qu'**on fait circuler un autre fluide à l'intérieur dudit espace confiné pour extraire localement lesdits additifs volatiles de ladite bordure annulaire de gaine à travers ladite paroi externe (33).

8. Méthode de montage selon la revendication 7, **caractérisée en ce qu'**on fait circuler ledit autre fluide chauffé à une température égale ou supérieure à la température dudit un fluide chauffé, à l'intérieur dudit espace confiné.

9. Conduite tubulaire flexible destinée au transport des hydrocarbures, ladite conduite tubulaire flexible (12) présentant une extrémité libre (14) équipée d'un embout de raccordement, ledit embout de raccordement étant monté sur ladite conduite tubulaire conformément à une méthode selon l'une quelconque des revendications 1 à 8.

10. Installation (10) de montage d'un embout de raccordement sur une conduite tubulaire flexible (12) destinée au transport des hydrocarbures, ladite conduite tubulaire flexible (12) présentant une extrémité libre (14) et comportant une gaine de pression interne (24) et des couches de renfort faites de fils d'armure (26) enroulés autour de ladite gaine de pression interne (24), ladite gaine de pression interne étant réalisée dans un matériau polymère comportant des additifs volatiles aptes à exsuder à la surface de ladite gaine de pression interne, ladite gaine de pression interne présentant une bordure annulaire (28) dans ladite extrémité libre (14), ladite bordure annulaire présentant une paroi interne (31) opposée à une paroi externe (33) ; **caractérisée en ce qu'**elle comprend :
- des moyens pour former une chambre annulaire (47) à l'intérieur de ladite bordure annulaire (28) le long de ladite paroi interne (31), ladite paroi interne (31) formant une portion de surface interne de ladite chambre annulaire ; et,
- des moyens pour faire circuler un fluide à l'intérieur de ladite chambre annulaire (47) pour extraire localement lesdits additifs volatiles de ladite bordure annulaire (28) de gaine à travers ladite paroi interne (31).

11. Installation selon la revendication 10, **caractérisée en ce que** lesdits moyens pour former une chambre annulaire comprennent une bague d'extraction (34) présentant une surface externe (36) de bague opposée à une surface interne (38) de bague et une gorge (46) ménagée dans ladite surface externe.

12. Installation selon la revendication 11, **caractérisée en ce que** ladite bague d'extraction (34) présente une bordure avant (40) libre taillée en biseau pour engager ladite bordure avant à l'intérieur de ladite bordure annulaire (28) de ladite gaine de pression (24) et à l'opposé, une bordure arrière d'arrêt (42).

13. Installation selon la revendication 11 ou 12, **caractérisée en ce que** lesdits moyens pour faire circuler un fluide à l'intérieur de ladite chambre annulaire comprennent des chemins de passages (48, 52 ; 48', 52') ménagés dans l'épaisseur de ladite bague d'extraction (34) et débouchant dans ladite gorge (46).

14. Installation selon la revendication 12 et 13, **caractérisée en ce que** lesdits chemins de passage (48, 52 ; 48', 52') comprennent des chemins d'entrée (48 ; 48') qui débouchent dans une première portion de gorge située vers ladite bordure avant (40) et dans ladite bordure arrière (42) et des chemins de sortie (52, 52') qui débouchent dans une seconde portion de gorge située vers ladite bordure arrière (42) et dans ladite bordure arrière (42).

15. Installation selon la revendication 13 ou 14, **caractérisée en ce qu'**elle comprend des moyens pour faire circuler un fluide chauffé à une température supérieure à 130°C, à l'intérieur desdits chemins de passage (48, 52 ; 48', 52').

## Claims

1. Method of mounting an end fitting on a flexible tubular pipe (12) intended to transport hydrocarbons, said method being of the type in which:
- there is procured a flexible tubular pipe (12) having a free end (14) and including an internal pressure sheath (24) and reinforcement layers made of armor wires (26) wound around said pressure sheath, said internal pressure sheath (24) being produced in a polymer material containing volatile additives liable to be exuded on the surface of said sheath,
- there is procured an end fitting provided with two concentric annular crimping portions,
- said internal pressure sheath (24) is stripped at said free end (14) to free an annular border (28) having an internal wall (31) opposite an external wall (33),
- said annular border (28) is crimped between said two concentric annular portions to a given thickness to form a fluid-tight connection between said annular border (28) and said end fitting,
**characterized in that** it further includes the following steps before the crimping step:
- there is formed an annular chamber (47) in the interior of said annular border (28) along said internal wall (31), said internal wall forming an internal surface portion of said annular chamber, and
- a fluid is caused to flow in the interior of said annular chamber (47) to extract said volatile additives locally from said annular border (28) of the sheath (24) through said internal wall (31), whereby the dimensional variations over time of said given thickness of said annular border (28) are substantially zero.

2. Method according to claim 1, **characterized in that** the internal wall (31) of said annular border is held in shape during the circulation of said fluid.

3. Method according to claim 1 or 2, **characterized in that** said fluid is guided in directions substantially parallel to said internal wall (31).

4. Method according to any of claims 1 to 3, **characterized in that** said fluid heated to a temperature greater than 130°C is caused to flow in the interior of said annular chamber (47).

5. Method according to any of claims 1 to 4, **characterized in that** said fluid is hot air.

6. Method according to any of claims 1 to 5, **characterized in that** said fluid is caused to flow in the interior of said annular chamber (47) at a pressure greater than 2 bar.

7. Method according to any one of claims 1 to 6, **characterized in that** the space around said annular border (28) is confined and another fluid is caused to flow in the interior of said confined space to extract said volatile additives locally from said sheath annular border through said external wall (33).

8. Method according to claim 7, **characterized in that** said other fluid is heated to a temperature equal to or greater than the temperature of said one heated fluid and caused to flow in the interior of said confined space.

9. Flexible tubular pipe intended to transport hydrocarbons, said flexible tubular pipe (12) having a free end (14) equipped with an end fitting, said end fitting being mounted on said tubular pipe by a method according to any of claims 1 to 8.

10. Installation (10) for fitting an end fitting to a flexible tubular pipe (12) intended to transport hydrocarbons, said flexible tubular pipe (12) having a free end (14) and including an internal pressure sheath (24) and reinforcement layers made up of armor wires (26) wound around said internal pressure sheath (24), said internal pressure sheath being produced in a polymer material containing volatile additives liable to be exuded on the surface of said internal pressure sheath, said internal pressure sheath having an annular border (28) in said free end (14), said annular border having an internal wall (31) opposite an external wall (33), **characterized in that** it comprises:
- means for forming an annular chamber (47) in the interior of said annular border (28) along said internal wall (31), said internal wall (31) forming an internal surface portion of said annular chamber, and
- means for causing a fluid to flow in the interior of said annular chamber (47) to extract said volatile additives locally from said sheath annular border (28) through said internal wall (31).

11. Installation according to claim 10, **characterized in that** said means for forming an annular chamber comprise an extraction ring (34) having an external ring surface (36) opposite an internal ring surface (38) and a groove (46) produced in said external surface.

12. Installation according to claim 11, **characterized in that** said extraction ring (34) has a beveled free front border (40) for engaging said front border in the interior of said annular border (28) of said pressure sheath (24) and at its opposite end an abrupt rear border (42).

13. Installation according to claim 11 or 12, **characterized in that** said means for causing a fluid to flow in the interior of said annular chamber comprise passage paths (48, 52; 48', 52') produced in the thickness of said extraction ring (34) and discharging into said groove (46).

14. Installation according to claims 12 and 13, **characterized in that** said passage paths (48, 52; 48', 52') comprise inlet paths (48; 48') that discharge into a first groove portion situated toward said front border (40) and into said rear border (42) and outlet paths (52, 52') that discharge into a second groove portion situated toward said rear border (42) and into said rear border (42) .

15. Installation according to claim 13 or 14, **characterized in that** it comprises means for causing a fluid heated to a temperature greater than 130°C to flow in the interior of said passage paths (48, 52; 48', 52').

## Patentansprüche

1. Montageverfahren eines Verbindungsendstücks an einer flexiblen rohrförmigen Leitung (12) zur Beförderung von Kohlenwasserstoffen, wobei das genannte Verfahren von der Art ist, die umfasst:
- das Bereitstellen einer flexiblen rohrförmigen Leitung (12), die ein freies Ende (14) aufweist und einen inneren Druckmantel (24) und um den genannten Druckmantel herumgewickelte Verstärkungsschichten aus Bewehrungsdrähten bzw. -fasern (26) umfasst, wobei der genannte innere Druckmantel (24) aus einem polymeren Material hergestellt ist, das flüchtige Additive enthält, welche an der Oberfläche des genannten Mantels ausschwitzen können,
- das Bereitstellen eines Endstücks mit zwei konzentrischen ringförmigen Bördelabschnitten,
- das Abmanteln des genannten inneren Druckmantels (24) von dem genannten freien Ende (14), um einen ringförmigen Rand (28) freizumachen, der eine zur Außenwand (33) entgegengesetzte Innenwand (31) aufweist,
- das Bördeln des genannten ringförmigen Rands (28) zwischen den genannten konzentrischen ringförmigen Abschnitten entsprechend einer gegebenen Dicke, um zwischen dem genannten ringförmigen Rand (28) und dem genannten Ende eine dichte Verbindung zu bilden;
**dadurch gekennzeichnet, dass** es außerdem, vor dem Bördelschritt, die folgenden Schritte umfasst:
- man bildet im Innern des genannten ringförmigen Rands (28) längs der genannten Innenwand (31) eine ringförmige Kammer (47) aus, wobei die genannte Innenwand einen Teil der Innenoberfläche der genannten ringförmigen Kammer bildet; und
- man lässt im Innern der genannten ringförmigen Kammer (47) ein Fluid zirkulieren, um lokal die genannten flüchtigen Additive aus dem genannten ringförmigen Rand (28) des Mantels (24) durch die genannte Innenwand (31) hindurch zu extrahieren, wodurch die dimensionellen Veränderungen der gegebenen Dicke des genannten ringförmigen Rands (28) über die Zeit im Wesentlichen null sind.

2. Montageverfahren nach Anspruch 1, **dadurch gekennzeichnet, dass** man die Form der Innenwand (31) des genannten ringförmigen Rands während der Zirkulation des genannten Fluids aufrechterhält.

3. Montageverfahren nach Anspruch 1 oder 2, **dadurch gekennzeichnet, dass** man das genannte Fluid gemäß Richtungen leitet, die im Wesentlichen zu der genannten Innenwand (31) parallel sind.

4. Montageverfahren nach einem der Ansprüche 1 bis 3, **dadurch gekennzeichnet, dass** man das auf eine Temperatur von mehr als 130°C erwärmte Fluid im Innern der genannten ringförmigen Kammer (47) zirkulieren lässt.

5. Montageverfahren nach einem der Ansprüche 1 bis 4, **dadurch gekennzeichnet, dass** das genannte Fluid warme Luft ist.

6. Montageverfahren nach einem der Ansprüche 1 bis 5, **dadurch gekennzeichnet, dass** man das genannte Fluid mit einem Druck höher als 2 bar im Innern der genannten ringförmigen Kammer (47) zirkulieren lässt.

7. Montageverfahren nach einem der Ansprüche 1 bis 6, **dadurch gekennzeichnet, dass** man außerdem den Raum abgrenzt, der sich um den genannten ringförmigen Rand (28) herum erstreckt, und dass man ein anderes Fluid im Innern des genannten abgegrenzten Raums zirkulieren lässt, um lokal die genannten flüchtigen Additive aus dem genannten ringförmigen Mantelrand durch die genannte Außenwand (33) hindurch zu extrahieren.

8. Montageverfahren nach Anspruch 7, **dadurch gekennzeichnet, dass** man das genannte andere im Innern des genannten abgegrenzten Raums zirkulierende Fluid auf eine Temperatur erwärmt, die gleich ist oder höher als die Temperatur des genannten einen Fluids.

9. Flexible rohrförmige Leitung, bestimmt zur Beförderung von Kohlenwasserstoffen, wobei die genannte rohrförmige Leitung (12) ein mit einem Verbindungsendstück versehenes freies Ende (14) umfasst und das genannte Verbindungsendstück gemäß einem Verfahren nach einem der Ansprüche 1 bis 8 auf die genannte rohrförmige Leitung montiert ist.

10. Einrichtung zur Montage eines Verbindungsendstücks an einer flexiblen rohrförmigen Leitung (12) zur Beförderung von Kohlenwasserstoffen, wobei die genannte flexible rohrförmige Leitung (12) ein freies Ende (14) aufweist und einen inneren Druckmantel (24) und um den genannten Druckmantel (24) herumgewickelte Verstärkungsschichten aus Bewehrungsdrähten bzw. -fasern (26) umfasst, und der genannte innere Druckmantel aus einem polymeren Material hergestellt ist, das flüchtige Additive enthält, welche an der Oberfläche des genannten Mantels ausschwitzen können, wobei der genannte innere Druckmantel in dem genannten freien Ende (14) einen ringförmigen Rand (28) aufweist und der genannte ringförmige Rand eine einer Außenwand (33) entgegengesetzte Innenwand (31) aufweist;
**dadurch gekennzeichnet, dass** sie umfasst:
- Mittel zur Ausbildung einer ringförmigen Kammer (47) im Innern des genannten ringförmigen Rands (28) längs der genannten Innenwand (31), wobei die Innenwand (31) einen Teil der Innenoberfläche der genannten ringförmigen Kammer bildet; und
- Mittel, welche die Zirkulation eines Fluid im Innern der genannten ringförmigen Kammer (47) bewirken, um lokal die genannten flüchtigen Additive aus dem genannten ringförmigen Rand (28) des Mantels durch die genannte Innenwand (31) hindurch zu extrahieren.

11. Einrichtung nach Anspruch 10, **dadurch gekennzeichnet, dass** die genannten Mittel zur Ausbildung einer ringförmigen Kammer einen Extraktionsring (34) umfassen, der eine einer Ring-Innenoberfläche (38) entgegengesetzte Ring-Außenoberfläche (36) und einen in der genannten Außenoberfläche vorgesehenen Durchlass (46) umfasst.

12. Einrichtung nach Anspruch 11, **dadurch gekennzeichnet, dass** der genannte Extraktionsring (34) einen freien vorderen Rand (40) aufweist, schräg angespitzt, um den genannten vorderen Rand ins Innere des genannten ringförmigen Rands (28) des genannten Druckmantels (24) hineinzustecken, und, auf der entgegengesetzten Seite, einen hinteren Anschlagsrand (42).

13. Einrichtung nach Anspruch 11 oder 12, **dadurch gekennzeichnet, dass** die das Zirkulieren eines Fluids im Innern der genannten ringförmigen Kammer bewirkenden Mittel Passierwege (48, 52 ; 48' 52') umfassen, die in die Dicke des genannten Extraktionsrings (34) eingearbeitet sind und in dem genannten Durchlass (46) münden.

14. Einrichtung nach Anspruch 12 und 13, **dadurch gekennzeichnet, dass** die genannten Passierwege (48, 52 ; 48' 52') Eingangswege (48, 48') umfassen, die in einem beim genannten vorderen Rand (40) befindlichen ersten Durchlassabschnitt und in dem genannten hinteren Rand (42) münden, und Ausgangswege (52, 52'), die in einem beim genannten hinteren Rand (42) befindlichen zweiten Durchlassabschnitt und in dem genannten hinteren Rand (42) münden.

15. Einrichtung nach Anspruch 13 oder 14, **dadurch gekennzeichnet, dass** sie Mittel umfasst, welche die Zirkulation eines auf eine Temperatur von mehr als 130°C erwärmten Fluids im Innern der genannten Passierwege (48, 52 ; 48' 52') bewirken.
